# EUROPEAN PATENT SPECIFICATION

(11) **EP 3 108 166 B1**
(45) Date of publication and mention of the grant of the patent: **07.11.2018**
(21) Application number: 15752769.8
(22) Date of filing: 18.02.2015
(51) Int. Cl.: H01F 7/08, H01F 7/16, H01F 7/14, F16K 31/06, F16K 1/36

(54) **ELECTROMECHANICAL VALVE**
ELEKTROMECHANISCHES VENTIL
VANNE ÉLECTROMÉCANIQUE

(30) Priority: 19.02.2014 SE 1400094; 03.07.2014 SE 1400339
(43) Date of publication of application: 28.12.2016
(73) Proprietor: Staccato Technologies AB, 43153 Mölndal (SE)
(72) Inventor: JOHANSSON, Per-Ove, 142 64 Trångsund (SE)
(74) Representative: Sandström, Staffan Sven
(86) International application number: PCT/SE2015/000008
(87) International publication number: WO 2015/126304

(56) References cited:
- WO-A1-2008/156405
- WO-A1-2008/156405
- DE-A1-102009 042 645
- GB-A- 2 394 028
- US-A- 3 269 689
- US-A- 3 269 689
- US-A- 3 921 670
- US-A1- 2003 037 738

## Description

### TECHNICAL FIELD

The invention relates generally to valves and more specifically to an electromechanical valve.

### BACKGROUND

Among disadvantages with today's electromechanical valves are low efficiency, long response times, dirt sensitivity, wearing, sticking and working medium leakage. One type of electromagnetic valve that can improve the performance of electromagnetic valves is described in WO 2008/156405 WO 2008/156405 discloses an electromechanical valve according to the preamble of present claim 1.

There is a constant desire to improve the performance and robustness of electromagnetic valves. Hence there exists a need for an improved electromagnetic valve.

### SUMMARY

The object of the invention is to overcome or at least partly reduce the disadvantages with prior electromechanical valves and to provide an improved electromagnetic valve.

This object and other are, at least partly, attained by the electromechanical valve according to the present invention as set out in the appended claims.

In accordance with one embodiment an electromechanical valve is provided. The valve comprises a housing. In the housing there is a core of magnetic material surrounded by a coil to be supplied with excitation current. Further there is a valve seat that can be attached to the housing or some other part of the valve. In conjunction with the valve seat there is a space. The space can be located between the valve seat and the core. The valve comprises at least one outlet port in said valve seat and at least one inlet port communicating via the space, and a valve washer of magnetic material arranged in said space to open/close the valve in response to an excitation current supplied to the coil. The valve washer is formed by multiple stacked plates providing a spring force when the valve washer is compressed. The multiple stacked plates are made of a magnetic material, i.e. a material that is magnetically conducting. In some embodiments each of the stacked plates is essentially identical to each other. The valve washer is compressed when the coil is energized so as to attract the valve washer. The plates are partially displaceable in relation to each other in at least one direction. Hereby an improved spring force can be achieved. Also the design of the valve washer is facilitated by allowing the plates to move slightly in relation to each other.

The plates are typically thin with a thickness of 0.02 - 0.6 mm and flexibleThe plates can have a size or diameter of 10 mm - 100 mm. In some embodiments the number of plates is in the range of 2 - 70 plates. Further, the top and/or bottom plate is in some embodiments made of another material than the other plates and the top and/or bottom plate can be given another shape than the other plates. In some embodiments at least two plates cooperating with each other are essentially identical. The at least two plates can be supplemented with outer plates having other dimensions or made of other materials as described herein.

In accordance with one embodiment the plates are secured to each other at one section of the plates. The plates can be secured to each other with a joint. In accordance with some embodiments a bolt of the bolted joint is provided with a sealing and wherein the bolt faces the valve seat. In other sections the plates are not secured to each other thereby making it possible for the plates to move in relation to each other in said other sections. Thus, the thin plates stacked together are fixed together at one section and a displaceable in relation to each other at another section.

In accordance with one embodiment the plates are secured to each other at a central section of the plates.

According to the present invention the plates are provided with slits. The plates are generally circular and the slits are provided in a radial direction. The width of the slits is be formed to increase in a radial direction towards the perimeter edge of the plates. Also the slits can extend all the way to the perimeter of the plates. Further the top and/or bottom plate can have slits that are differently shaped than the slits of the other plates. For example the top and/or bottom plate can have slits that are larger than the slits of the other plates.

The valve in accordance with the present invention will provide a robust electromagnetic valve that can be controlled with short opening and closing time thereby enabling an accurate control of working medium flow and pressure.

### BRIEF DESCRIPTION OF THE DRAWINGS

The invention will now be described in more detail by means of non-limiting examples and with reference to the accompanying drawings, in which:
- Fig. 1 is an axial section of an embodiment of an electromechanical valve,
- Fig. 2 is a perspective view of a first example of a valve washer of a valve not forming part of the present invention,
- Figs. 3 - 5 are exploded views of a valve washer according to an embodiment,
- Figs. 6 - 9 are views of the valve washer according to the embodiment,
- Figs. 10 and 11 illustrate different types of electromagnetic valves,
- Figs. 12 a - 12c illustrate yet another valve and valve washer according to a second example, not forming part of the present invention, and
- Fig. 13 is a view of a drive circuit for driving an electromagnetic valve.

### DETAILED DESCRIPTION

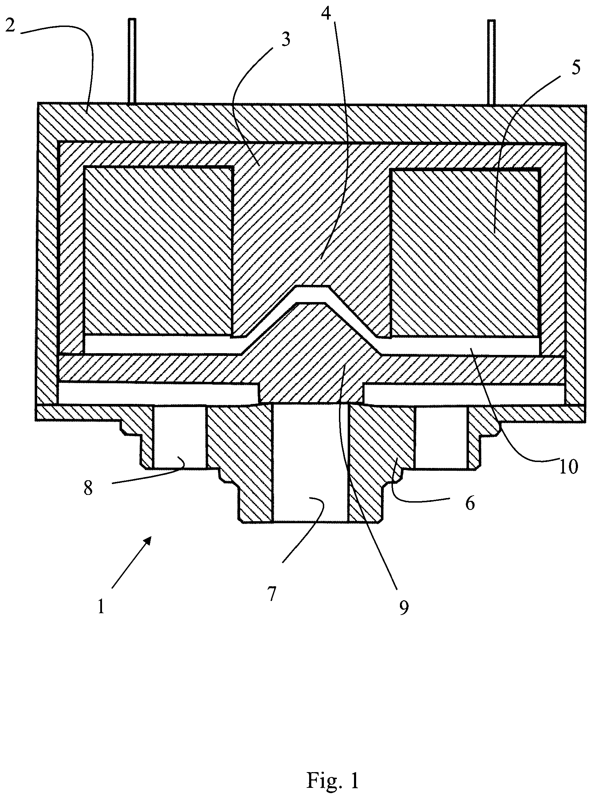

In Fig. 1, an axial section of an embodiment of an electromechanical valve 1, e.g. a pneumatic valve, is shown. The valve can be designed to operate with other fluids other than air.

The valve 1 comprises a housing 2 of non-magnetic material, e.g. aluminium. Inside the housing 2 a core 3 of a magnetic material is located. The core 3 has a centrally extending portion 4 that is surrounded by a coil 5. In one embodiment the core 3 is generally cup-shaped. In one embodiment the core 3 can be U-shaped. Other shapes are possible, such as an E-shape.

In one embodiment, the centrally located portion 4 extends to the rim of the cup shaped electromagnetic core 3. It is however to be understood that the portion 4 may be shorter or longer than the height of the wall of the core.

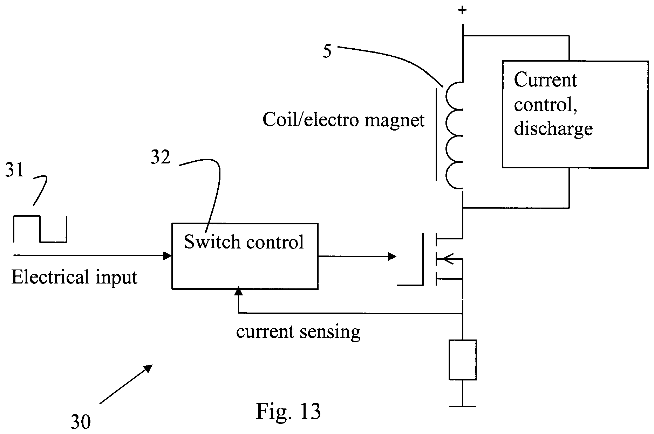

The coil 5 is supplied with excitation current from a current source such as the one described below in conjunction with Fig. 13 via its terminals.

Preferably, the coil 5 has low inductance and the current source to be connected to the terminals has current generator characteristics.

A valve seat 6, also of non-magnetic material, e.g. aluminium, is attached, e.g. by means of screws (not shown), to the housing 2 with a space to the core 3.

The valve 1 further has an outlet port 7. In one embodiment, the valve seat 6 has a centrally located outlet port 7. In accordance with another embodiment more than one outlet port 7 is provided.

The valve 1 further comprises an inlet port 8. In accordance with one embodiment the valve 1 comprises two inlet ports 8 at a radial distance from the outlet port 7. The number of inlet ports can vary for different applications. At least one inlet port 8 is provided and more may be used.

The outlet port 7 and the inlet ports 8 are in communication via a space between the valve seat 6 and the core 3.

It is to be understood that the location of the inlet ports 8 is not restricted but that the location of the inlet ports 8 can depend on the intended use of valve 1 and can hence be located at any suitable location depending on the field of use of the valve 1.

In accordance with some embodiments, a valve washer 9 of magnetic material is arranged in the space between the valve seat 6 and the core 3.

In accordance with one embodiment the washer 9 is suspended by spring ribs extending from the valve washer 9 to keep the outlet port 7 closed in absence of excitation current to coil 5.

In accordance with one embodiment the washer is formed by multiple layers of a magnetic material forming a blade spring whereby the washer does not need to be suspended but can provide the required spring force in itself. In other words the valve washer 9 is arranged in a space formed between the valve seat 6 and the core 3. When the washer of electromagnetic material is attracted by an energized coil, a part of the valve washer moves towards the coil to open/close the valve. Another part of the valve washer is restricted. The restriction can for example be obtained by letting the rim of the washer rest against an abutment in the valve as is seen in Fig. 1. In other embodiments a part of the package of stacket plates can be fixed in one section and movable in another section. Due to the stacked plates of the valve washer, a counteracting spring force is also generated when the part of the washer that can move towards the coil is attracted to the coil.

In other words, when excitation current is supplied to the coil 5, the valve washer 9 cooperates with, i.e. is attracted by, core 3 to open the outlet port 7. When no excitation current is supplied the valve washer returns to an initial position by its inherent spring force.

The valve washer 9 in some embodiments, preferably, has a stroke ≤ 2 mm to keep dimension down.

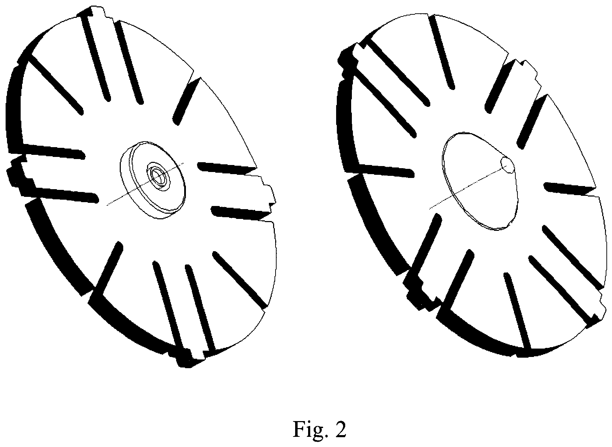

In Fig. 2 a perspective view from both sides of an example of a valve washer 9 formed by multiple layers of a magnetic material is shown. The layers form a blade spring washer that enables the washer to return to its seat when not excited by any electricity.

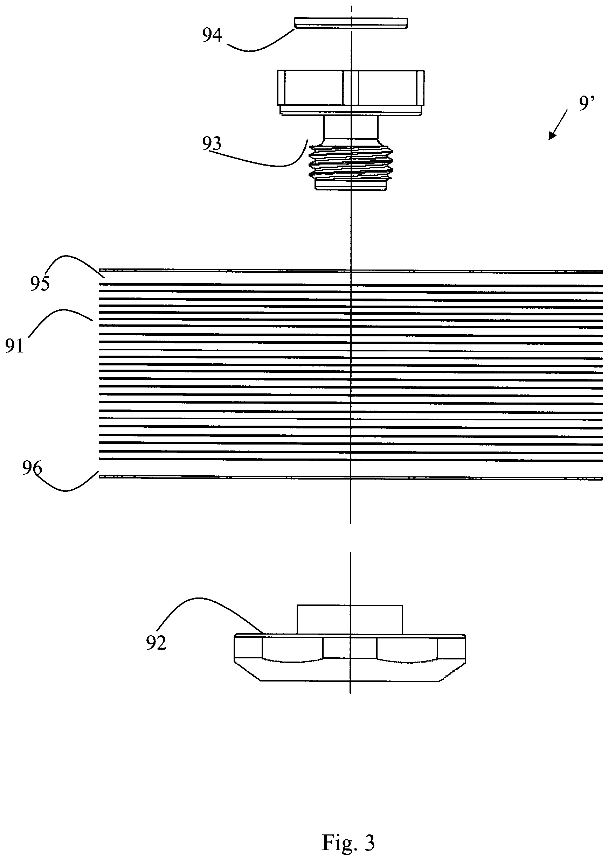

In Fig. 3 an exploded view from the side of an embodiment of a valve washer 9' is shown. The valve washer 9' is formed by multiple layers of plates 91 of a magnetic material. The plates 91 that are stacked on top of each other form a blade spring washer that enables the valve washer to return to its seat when the core not excited by any electricity. Each plate 91 is formed by a thin sheet of soft magnetic material, e.g. of a suitable type of steel, such as stainless steel. The valve washer 9' further comprises a bolted joint formed by a nut 92 and a bolt 93. The bolt 93 can further have a sealing 94 formed by an elastic material attached thereto to enhance the seal against the valve seat when the valve is closed. Also one or both of the top and bottom plates of the multiple stacked plates 91, denoted 95 and 96 in Fig. 3, can be thicker and/ or made of another material, even of non-magnetic material, than the other plates 91. Thus, in accordance with some embodiments the plate 95, 96 is designed differently from the other plates in the stack of plates 91. In particular this plate can be thicker or of another material, even of non-magnetic material, than the other plates of the valve washer. This is advantageous in that the plate 95, 96 thereby will endure more mechanical stress than the other plates and by letting the plate 95, 96 have other properties, e.g. higher wear resistance, than the other plates, the expected lifetime of the valve washer and of the valve can be increased, especially if one of or both outer plates, in a further embodiment, would be arranged easily replaceable as an in-expensive spare part item.

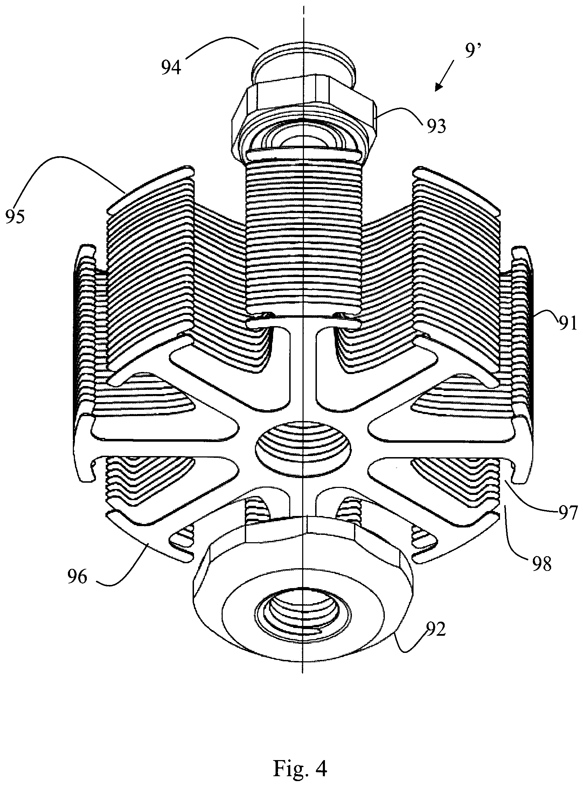

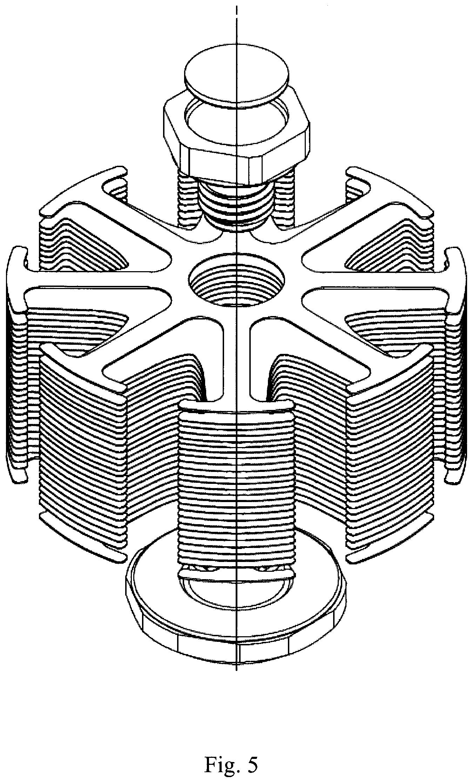

In Figs. 4 and 5 the valve washer in Fig. 3 is seen as an exploded view in perspective from the top and bottom, respectively. As can be seen in fig. 4 and 5 each layer 91 of the valve washer 9' can have a generally circular perimeter and the thickness of a layer 91 is small in relation to the area of the layer. Typical dimensions for a plate of a layer in the valve washer can be between 0.02 mm - 0.6 mm thick. In accordance with some embodiments the plates have a thickness of about 0.03 - 0.07 mm, such as about 0.05 mm. In one embodiment the plates have a uniform thickness. The In accordance with some embodiments the size or diameter of the valve washer 9' can be in the range of 10 mm - 100 mm.

Further, the number of stacked thin plates 91 forming the valve washer can also vary. In some applications the number of thin plates can range from 2 - 70. In some applications the number of essentially identical plates 91 is at least three. In yet other applications the number of plates 91 is in the range 3 - 40 or in the range 5 - 20.. In some embodiments at least two plates cooperating with each other are essentially identical. The at least two essentially identical plates can be supplemented with outer plates having other dimensions or made of other materials as described herein.

Further, a plate 91, in particular each plate 91, is provided with radially oriented slits 97. The slits have a width that increases in a radial direction out towards the perimeter edge of the plates. The slits 97 can in accordance with one embodiment extend all the way to the periphery of the plates. In accordance with some embodiments the slits are shaped such that the width of the slits decreases at the periphery of the plates. This will form a valve washer having a number of T-shaped tongues extending from a central section forming an essentially circular valve washer. In particular the outer plates can have the T-shaped tongues. The T-shaped outer tongues will provide good spring characteristics while keeping the wear surface large. Further, in accordance with some embodiments the slits 98 of the top and/or bottom plate 95, 96 of the valve washer can have slits that are shaped different from the slits of the other plates 91 in the valve washer. In particular the slits 98 of an outer plate in the valve washer 9' can be larger i.e. having a larger area cut out from the plate, than the corresponding slits 97 of the other plates 91. The exact shape of the slits can vary depending on the application. The design of the slits can be used to choose the desired spring characteristics of the valve washer. Also the design of the slits can be used to choose the magnetic properties of the valve washer. For example a plate of the valve washer having less material cut out in the slits will have more magnetic material left and will hence be able to carry a higher magnetic flow.

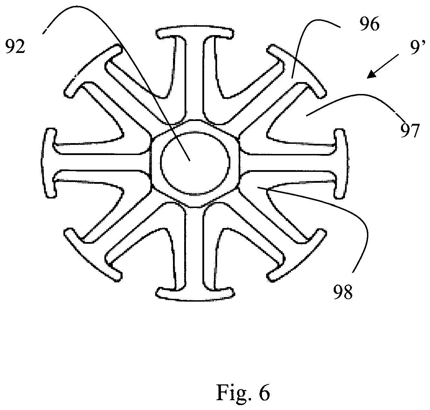

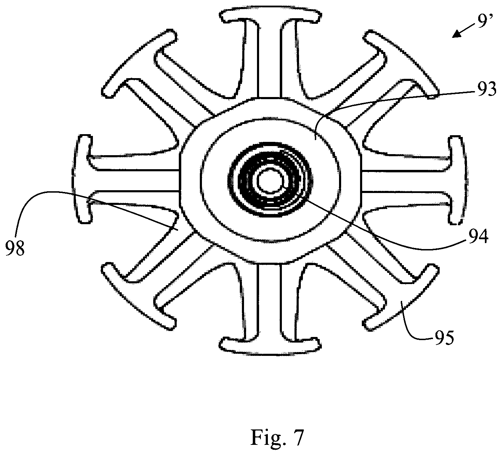

In Fig. 6 and 7 the valve washer 9' is shown in a top view and a bottom view respectively.

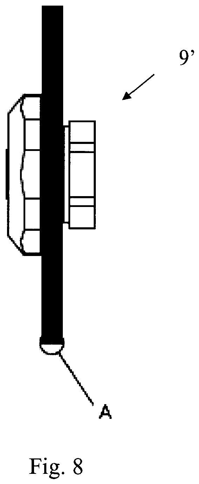

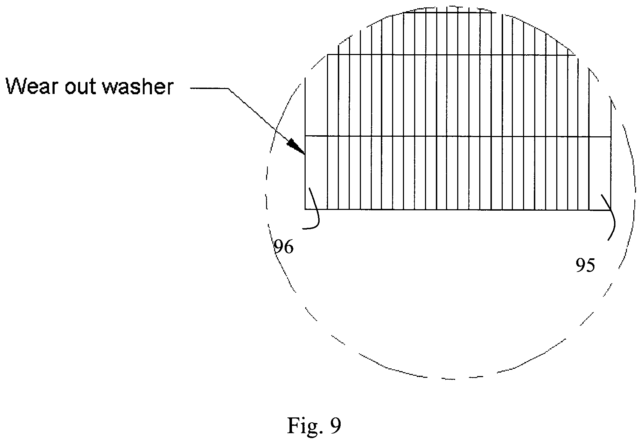

As set out above, in accordance with some embodiments the top and/or bottom plate of the valve washer 9' is given a design different from the other plates. The top and bottom plates can be made thicker and can also be made of another material than the other plates in the valve washer to serve as wear out washers. Also the plates 95 and 96 can increase the stability of the valve washer 9', which can facilitate and allow for robust handling of the valve washer 9'. This is depicted in Fig. 8 and Fig. 9 which shows a detail of Fig. 8. Thus, In Fig. 9, the outer plates 95 and 96 are thicker than the other plates located in between the plates 95 and 96.

In accordance with one embodiment the plates 91 of the valve washer 9, 9', 9" are secured, as set out above, by means of a bolted joint. In particular there is one bolted joint provided at a central section in all plates that keeps the valve washer together as a single unit that can move in the space between the valve seat and the core. Other methods of securing the individual washers/plates of the valve washer can be envisaged. For example the stacked package of plates forming the valve washer can be clamped glued or welded together. Regardless of the method used it is typically advantageous to use a securing that allows for a displacement between individual plates of the valve washer, at least at some section(s) of the valve washer. Thus, the plates can then, at least partly, be displaced in relation to each other in at least one direction such as a radial direction. In accordance with one embodiment the plates are secured to each other at a central location, and can be displaced in relation to each other in a radial direction of the plates at the outer sections of the plates. This allows, outside said securing location, for a small, essentially radial movement in terms of sliding between the individual plates/washers of the valve washer, when it is compressed during the excitation phase, respectively de-compressed (spring return) during the de-excitation phase. The movement, for example a radial movement, between the individual washers of the valve washer will further contribute to a dampening of the movement of the valve washer in the space where it can move between two positions corresponding to an open and a closed position of the valve.

The valve 1 can have other designs using a valve washer 9, 9' and 9" as described herein. Generally, the valve washer 9, 9' 9", is arranged in a space in the valve and moves between two positions in response to a magnetic field generated by an electromagnet. The two positions can correspond to an open and a closed state of the valve. Some different design options will now be described.

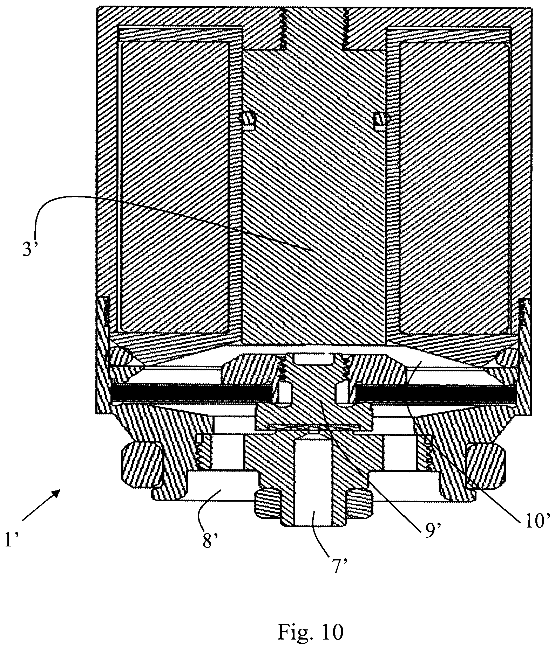

In Fig. 10 a valve 1' having a valve washer 9' or 9" as described herein is depicted. The valve washer can move in the space 10' between a valve seat and a core 3'. The valve 1' is of a type that can be labeled "normally closed". Thus, when there is no current supplied to the coil for magnetizing the core 3', the valve washer is suspended in its seat closing the opening 7'. When the core is magnetized, the valve washer, here the central portion of the valve washer, moves in the space towards the coil and opens a channel from the inlet 8 to the outlet 7 so that a flow of, for example, pressurized air can flow through the valve 1'. When the core is de-magnetized, the valve washer returns by the spring force built-up when the valve was opened.

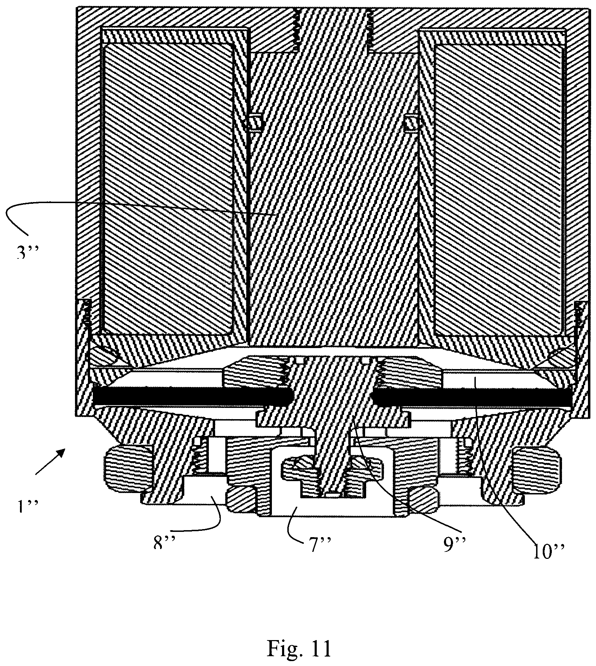

In Fig. 11, a valve 11" similar to the valve 1' is shown. The valve 1" is however of a type that can be labeled "normally open". Thus, when there is no current supplied to the coil for magnetizing the core 3" the valve washer is suspended in a position where the valve washer is in a position with the valve washer away from the valve seat. When the core is magnetized the valve washer in the valve 1" is drawn to the valve seat closing the valve 1". When the core is de-magnetized, the valve washer returns by the spring force built-up when the valve was closed.

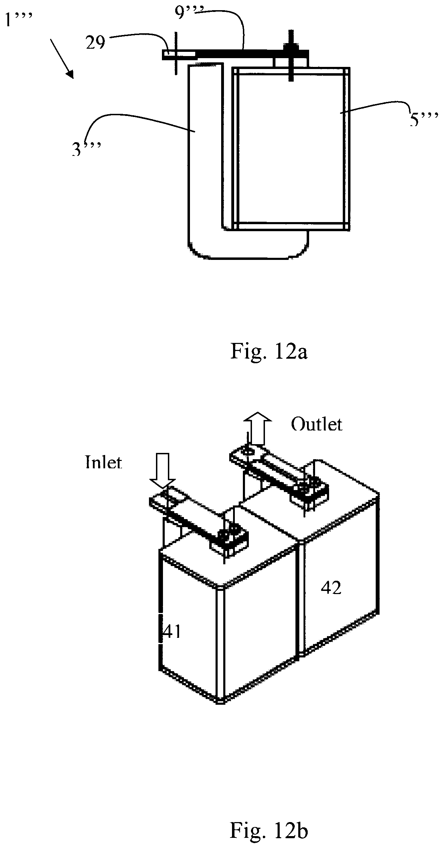

In Fig. 12a, yet another example of a valve 1"' is depicted. For ease of understanding only parts of the valve 1'" is depicted in Fig. 12a. The valve comprises in a housing (not shown) a core 3"'. The core 3'" can be generally U shaped. The core 3"' can be magnetized by a coil 5"'. The coil 5'" can, preferably be wound around one leg of a U-shaped core. The valve 1"' further comprises a valve washer 9"'. The valve washer 9'" is in one end section attached to the core 3"'. In case of a U-shaped core the valve washer 9'" can be attached to an end section of the U-shaped core. Another end section of the valve washer 9"' can be arranged in a space between a valve seat (not shown) and the core 3"'. In particular the other end section can be provided in close connection to the other end section of a U- shaped core. When the core is magnetized the valve washer cooperates with the core to move the valve washer between two positions. One position when the valve washer is attracted by the core 3'" and another position where the core 3"' is not magnetized and the valve washer returns to an initial position using the spring force of the valve washer. The valve washer 9'" can further have an outer end section with a lip 29. The lip can be provided in conjunction with an inlet/outlet (not shown) of the valve 1'". When the valve washer moves between its two positions in response to an excitation current provided to the coil 5"', the lip 29 acts to open/close the inlet/outlet from the valve 1"'.

In Fig. 12b a valve 1'" that can control both an inlet and an outlet is shown. Thus, in Fig. 12b a valve arrangement with two valves 41 and 42 both comprising a valve washer arrangement such as the valve washer depicted in Fig. 12a is provided. The inlet is controlled by a first valve 41 and the outlet is controlled by a second valve 42.

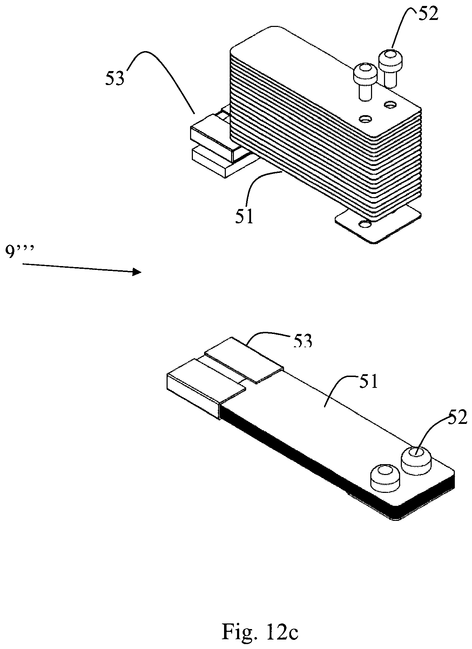

In Fig. 12c the valve washer 9"' of Figs. 12a and 12b is shown in more detail. The valve washer 9'" is formed by a number of stacked plates 51. The plates can have a generally rectangular shape. The dimensions of the rectangular plates 51 can be generally as for the essentially circular plates 91 as described above. For example the rectangular plates 51 can have a cross-section of about 10 - 100 mm and a thickness of about 0.02 - 0.6 mm. In one section the plates are secured to each other. In one example the plates are secured in an end section. The plates can be secured by means of a bolted joint 52. In one embodiment the stacked plates are bolted directly to the core 3"'. In another section, where the stacked plates are not secured to each other, the plates can be displaced in relation to each other in at least one direction. Hereby it is possible to achieve a spring force whereby the valve washer does not need to be suspended but can provide a required spring force in itself to return to a position where the valve washer is not attracted by the core. In accordance with one embodiment the valve washer 9"' has a clamp 53, for restricting, but not entirely preventing displacement of the individual plates in relation to each other in the another section. In accordance with one example the bolted joint 52 is provided in one end section of stacked rectangular plates and the clamp 53 is provided in the other end section of the stacked rectangular plates. The clamp 53 can further be adapted to cooperate with an inlet/outlet to close/open the inlet outlet when the valve washer moves between two positions as a result of the switched magnetisation of the core. The clamp 53 can be provided with a sealing element for providing a good seal when closing an inlet/outlet.

It is to be understood that features described in conjunction with a particular embodiment is not restricted to that particular embodiment. To the contrary the embodiments serve as illustration of different design options only. The valve washer in Fig. 12c can have outer plates of other dimensions or by other materials.

In Fig. 13 a drive circuit 30 for providing an efficient drive current for driving the valve 1, is shown. The drive circuit 30 comprises an input terminal 31 supplying an input signal. The drive circuit 30 provides a drive current for the electromagnetic coil 5. In one embodiment the drive current is provided by a switched current controlled by a control circuit 32 for opening and closing the valve 1. By controlling the switching times the valve 1, can be controlled to let through an appropriate amount of medium flow. The switching can preferably be performed by current sensing switching. The drive circuit hereby can act as a current generator providing a pulse width modulated drive current. The drive circuit can also be used for the valves 1' and 1". It is advantageous for some applications if the response time for the electromagnetic valve can be made short. This is because a short response time allows for a high switching frequency, a higher resolution and an expanded operational range for the medium flow, which is desired in many applications. In order to achieve a short response time the core 3 can in accordance with one embodiment be made of a magnetic material with a short response time reducing the presence of eddy currents. This can be achieved by manufacturing the core by plates made of a magnetic material in multiple layers or using other materials having a short response time such as Somaloy. Also the resistance of the magnetic material can be made high so that the electric conductivity is made low.

Thus, using an electromagnetic valve as described herein a valve having improved properties can be achieved. By providing a plate stack assembly structure having magnetic properties in the valve as described herein, in one and the same element it is possible
- to achieve an appropriate magnet flow geometry and strength due to the aggregate large cross-sectional area of all the multiple plates in the stack assembly, by which fact a strong and fast forward movement of said element (opening/closing, or vice versa, of the valve) during the excitation phase can be achieved, and
- at the same time, to achieve an advantageously appropriate spring characteristics in the stack assembly, due to the multiplicity of the thin (and flexible) plates in the stack assembly and their at least partial movability in relation to each other, by which fact an advantageously strong and fast return movement of said element (closing/opening, or vice versa, of the valve) during the de-excitation phase can be achieved.
- In addition the stacked assembly will provide good dampening characteristics which is advantageous since the stack assembly can be arranged in a space of the valve.

On the basis of the teachings above, the selection of the number, thickness, design and material of the magnetic plates in the stacked assembly forming the valve washer can then be made in dependence on the desired size and strength of the magnetic flow through the package and its desired return spring characteristics, which parameters in turn will depend on the desired force and speed of the valve for the intended field of application.

## Claims

1. An electromechanical valve (1), comprising a housing (2) and comprising in the housing (2)
- a core (3) of a magnetic material surrounded by a coil (5) of the valve to be supplied with excitation current,
- a valve seat (6), and
- a valve washer (9') of a magnetic material arranged in a space to open/close the valve in response to an excitation current supplied to said coil (5) by moving in the space between the valve seat and the core (3), and wherein said valve washer (9') is formed by multiple stacked plates (91, 95, 96) made of a magnetic material providing a return spring force when the valve washer is attracted to by the energized coil, said plates being at least partially displaceable in relation to each other in at least one direction, wherein the plates (91, 95, 96) are provided with slits (97, 98), wherein the plates (91, 95, 96) are generally circular and the slits (97, 98) are provided in a radial direction,
**characterised in that** the width of the slits (97, 98) increases in a radial direction towards the perimeter edge of the plates (91, 95, 96).

2. The valve according to claim 1, wherein the plates are thin with a thickness of 0.02 - 0.6 mm.

3. The valve according to claim 1 or 2, wherein the plates have a diameter of 10 mm - 100 mm.

4. The valve according to any of claims 1 - 3, wherein the number of plates is in the range of 2 - 70 plates.

5. The valve according to any of claims 1 - 4, wherein a top and/or bottom plate (95, 96) of the plates is made of another material than the other plates (91).

6. The valve according to any of claims 1 - 5, wherein a/ the top and/or bottom plate (95, 96) of the plates is given another shape than the other plates (91).

7. The valve according to claim 6, wherein the top and/or bottom plate (95, 96) are in the form of T-shaped tongues.

8. The valve according to any of claims 1 - 7, wherein the stacked plates are fixed to each other at one section of the plates and displaceable in relation to each other at another section of the plates.

9. The valve according to any of claims 1 - 8, wherein the said plates (91, 95, 96) are secured to each other at one section of the plates.

10. The valve according to claim 9, wherein the plates (91, 95, 96) are secured with a bolted joint (92, 93).

11. The valve according to claim 10, wherein a bolt (93) of the bolted joint is provided with a sealing (94) where the bolt faces the valve seat.

12. The valve according to any of claims 9 - 11, wherein the plates (91, 95, 96) are secured to each other at a central section of the plates.

13. The valve according to any one of claims 1 - 12, wherein the slits (97, 98) extend all the way to the perimeter of the plates (91, 95, 96).

14. The valve according to any one of claims 1 - 13, wherein a/ the top and/or bottom plate (95, 96) of the plates has slits (98) that are differently shaped than the slits (97) of the other plates (91).

15. The valve according to claim 14, wherein the top and/or bottom plate (95, 96) has slits (98) that are larger than the slits (97) of the other plates (91).

## Patentansprüche

1. Elektromechanisches Ventil (1), das ein Gehäuse (2) umfasst und in dem Gehäuse (2)
- einen Kern (3) aus einem Magnetwerkstoff, der von einer Spule (5) des Ventils umgeben ist, um mit Errergerstrom versorgt zu werden,
- einen Ventilsitz (6), und
- eine Ventilunterlegscheibe (9') aus einem Magnetwerkstoff umfasst, die in einem Raum angeordnet ist, um das Ventil als Reaktion auf einen Errergerstrom, der der Spule (5) durch Bewegen in dem Raum zwischen dem Ventilsitz und dem Kern (3) zugeführt wird, zu öffnen/schließen, und wobei die Ventilunterlegscheibe (9') aus mehreren gestapelten Platten (91, 95, 96) aus einem Magnetwerkstoff gebildet ist, die eine Rückstellfederkraft bereitstellen, wenn die Ventilunterlegscheibe von der erregten Spule angezogen wird, wobei die Platten mindestens teilweise in Bezug aufeinander in mindestens einer Richtung verschiebbar sind, wobei die Platten (91, 95, 96) mit Schlitzen (97, 98) bereitgestellt sind, wobei die Platten (91, 95, 96) im Wesentlichen kreisförmig sind und die Schlitze (97, 98) in einer radialen Richtung angeordnet sind,
**dadurch gekennzeichnet, dass** die Breite der Schlitze (97, 98) in einer radialen Richtung zur Umfangskante der Platten (91, 95, 96) hin zunimmt.

2. Ventil nach Anspruch 1, wobei die Platten dünn sind, wobei sie eine Dicke von 0,02 - 0,6 mm aufweisen.

3. Ventil nach Anspruch 1 oder 2, wobei die Platten einen Durchmesser von 10 - 100 mm aufweisen.

4. Ventil nach einem der Ansprüche 1 - 3, wobei die Anzahl von Platten im Bereich von 2 - 70 Platten liegt.

5. Ventil nach einem der Ansprüche 1 - 4, wobei eine obere und/oder untere Platte (95, 96) der Platten aus einem anderen Material als die anderen Platten (91) hergestellt ist.

6. Ventil nach einem der Ansprüche 1 - 5, wobei eine/die obere und/oder untere Platte (95, 96) der Platten eine andere Form aufweist, als die anderen Platten (91).

7. Ventil nach Anspruch 6, wobei die obere und/oder untere Platte (95, 96) in Form von T-förmigen Zungen vorliegen.

8. Ventil nach einem der Ansprüche 1 - 7, wobei die gestapelten Platten an einem Abschnitt der Platten aneinander befestigt sind und in Bezug aufeinander an einem anderen Abschnitt verschiebbar sind.

9. Ventil nach einem der Ansprüche 1 - 8, wobei die Platten (91, 95, 96) an einem Abschnitt der Platten aneinander befestigt sind.

10. Ventil nach Anspruch 9, wobei die Platten (91, 95, 96) mit einer Schraubverbindung (92, 93) befestigt sind.

11. Ventil nach Anspruch 10, wobei ein Bolzen (93) der Schraubverbindung mit einer Dichtung (94) bereitgestellt ist, wo der Bolzen dem Ventilsitz zugewandt ist.

12. Ventil nach einem der Ansprüche 9 - 11, wobei die Platten (91, 95, 96) an einem mittleren Abschnitt der Platten aneinander befestigt sind.

13. Ventil nach einem der Ansprüche 1 - 12, wobei sich die Schlitze (97, 98) bis zum Umfang der Platten (91, 95, 96) erstrecken.

14. Ventil nach einem der Ansprüche 1 - 13, wobei eine/die obere und/oder untere Platte (95, 96) der Platten Schlitze (98) aufweist, die anders geformt sind, als die Schlitze (97) der anderen Platten (91).

15. Ventil nach Anspruch 14, wobei die obere und/oder untere Platte (95, 96) Schlitze (98) aufweist, die größer als die Schlitze (97) der anderen Platten (91) sind.

## Revendications

1. Vanne électromécanique (1), comprenant un logement (2) et comportant dans le logement (2) :
- un noyau (3) en matériau magnétique entouré par une bobine (5) de la vanne à alimenter en courant d'excitation ;
- un siège de vanne (6) ; et
- une rondelle de vanne (9') en un matériau magnétique agencé dans un espace pour ouvrir/fermer la vanne en réponse à un courant d'excitation fourni à ladite bobine (5) en se déplaçant dans l'espace entre le siège de vanne et le noyau (3), et dans laquelle ladite rondelle de vanne (9') est formée par plusieurs plaques empilées (91, 95, 96) constituées d'un matériau magnétique fournissant une force de ressort de rappel lorsque la rondelle de vanne est attirée par la bobine sous tension, lesdites plaques pouvant être déplacées au moins partiellement l'une par rapport à l'autre dans au moins une direction, dans laquelle les plaques (91, 95, 96) sont pourvues de fentes (97, 98), dans laquelle les plaques (91, 95, 96) sont globalement circulaires et les fentes (97, 98) sont ménagées dans une direction radiale, **caractérisée en ce que** la largeur des fentes (97, 98) augmente dans une direction radiale vers le bord périphérique des plaques (91, 95, 96).

2. Vanne selon la revendication 1, dans laquelle les plaques sont minces avec une épaisseur de 0,02 à 0,6 mm.

3. Vanne selon la revendication 1 ou 2, dans laquelle les plaques ont un diamètre de 10 mm à 100 mm.

4. Vanne selon l'une quelconque des revendications 1 à 3, dans laquelle le nombre de plaques se situe dans la plage de 2 à 70 plaques.

5. Vanne selon l'une quelconque des revendications 1 à 4, dans laquelle une plaque supérieure et/ou inférieure (95, 96) parmi les plaques est constituée d'un autre matériau que les autres plaques (91).

6. Vanne selon l'une quelconque des revendications 1 à 5, dans laquelle une/la plaque supérieure et/ou inférieure (95, 96) parmi les plaques présente une autre forme que les autres plaques (91).

7. Vanne selon la revendication 6, dans laquelle la plaque supérieure et/ou inférieure (95, 96) se présente sous la forme de languettes en forme de T.

8. Vanne selon l'une quelconque des revendications 1 à 7, dans laquelle les plaques empilées sont fixées les unes aux autres au niveau d'une section des plaques et peuvent être déplacées les unes par rapport aux autres au niveau d'une autre section des plaques.

9. Vanne selon l'une quelconque des revendications 1 à 8, dans laquelle lesdites plaques (91, 95, 96) sont fixées les unes aux autres au niveau d'une section des plaques.

10. Vanne selon la revendication 9, dans laquelle les plaques (91, 95, 96) sont fixées avec un joint boulonné (92, 93).

11. Vanne selon la revendication 10, dans lequel un boulon (93) du joint boulonné est pourvu d'un joint d'étanchéité (94) où le boulon fait face au siège de vanne.

12. Vanne selon l'une quelconque des revendications 9 à 11, dans laquelle les plaques (91, 95, 96) sont fixées les unes aux autres au niveau d'une section centrale des plaques.

13. Vanne selon l'une quelconque des revendications 1 à 12, dans laquelle les fentes (97, 98) s'étendent jusqu'au périmètre des plaques (91, 95, 96).

14. Vanne selon l'une quelconque des revendications 1 à 13, dans laquelle la plaque supérieure et/ou inférieure (95, 96) parmi les plaques présente des fentes (98) de forme différente des fentes (97) des autres plaques (91).

15. Vanne selon la revendication 14, dans laquelle la plaque supérieure et/ou inférieure (95, 96) présente des fentes (98) plus grandes que les fentes (97) des autres plaques (91).
